# EUROPEAN PATENT SPECIFICATION

(11) **EP 3 179 880 B1**
(45) Date of publication and mention of the grant of the patent: **30.09.2020**
(21) Application number: 15824530.8
(22) Date of filing: 27.04.2015
(51) Int. Cl.: A45D 29/00, A45D 34/04, A45D 44/00, B41J 3/407, A61Q 3/00

(54) **APPARATUS FOR APPLYING COATING TO NAILS**
VORRICHTUNG ZUM AUFTRAGEN VON LACK AUF NÄGEL
APPAREIL D'APPLICATION D'UNE COUCHE SUR LES ONGLES

(30) Priority: 23.07.2014 US 201462028233 P; 25.08.2014 US 201414468239
(43) Date of publication of application: 21.06.2017
(73) Proprietor: Preemadonna Inc., Menlo Park, California 94025 (US)
(72) Inventor: WALIA, Herpreet Singh, Menlo Park, California 94025 (US); SCHULZ, Casey Kute, San Jose, California 95128 (US); BOGGAVARAPU, Deepak, San Carlos, California 94070 (US); PETERSON, Janet, Larkspur, CA 94939 (US); PETERSON, Peter, Larkspur, CA 94939 (US)
(74) Representative: Mewburn Ellis LLP
(86) International application number: PCT/US2015/027851
(87) International publication number: WO 2016/014132

(56) References cited:
- WO-A1-2014/091411
- WO-A1-2015/018987
- JP-A- 2012 085 944
- JP-A- 2013 192 681
- US-A- 3 130 734
- US-A- 4 864 966
- US-A- 4 910 661
- US-A- 5 668 930
- US-A- 6 067 996
- US-A1- 2005 041 018
- US-A1- 2009 153 604
- US-A1- 2012 103 210
- US-A1- 2013 216 295
- US-A1- 2013 235 137
- US-A1- 2013 274 907
- US-A1- 2014 060 560
- US-A1- 2014 161 507

## Description

### TECHNICAL FIELD

The present technology pertains to applying coating to nails, and more specifically pertains to utilizing an electronic apparatus to apply the coating.

### BACKGROUND

Applying coatings to nails for decorative or protective purposes is an established tradition. There are many ways people currently apply coatings to their nails: they can go to a salon; do it themselves; or affix a pre-made covering to their nail. Going to a salon, however, can be inconvenient and expensive; similarly, self-application can be a hassle and have poor results while nail coverings can be expensive with varying results.

### SUMMARY

The present invention relates to a nail decorating system as defined in claim 1 and to a corresponding method as defined in claim 13. Preferred features of the invention are set out in the dependent claims.

A system according to this disclosure can intelligently paint a user's fingernail using various sensors and motors. A touch sensitive surface and a camera can be used to detect the position of a fingernail in order to more accurately guide an applicator to paint the surface of the nail. Motors can move the applicator relative to the nail. The user can be directed to move their fingernail relative to the applicator, with or without motors connected to the applicator. The system can incorporate many of the features of a common smartphone, handheld communications device, or any other portable electronic device, especially the touch screen and camera. Disclosed are systems, methods, and non-transitory computer-readable storage media for controlling an applicator for the coating of nails.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

US2014/0060560 A1 discloses a nail printing apparatus to perform printing on a nail, the apparatus including an imaging device, an illumination device, a printing section and a movement mechanism.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1A illustrates an example device utilizing a smartphone in accordance with various embodiments;
FIG. 1B illustrates an example device in accordance with various embodiments;
FIG. 2 illustrates an example block diagram of the example systems shown in FIGS. 1A and 1B;
FIG. 3A illustrates various nail measurements;
FIG. 3B illustrates an image of a user's finger and nail with the nail perimeter outlined;
FIGS. 4A, 4B, and 4C illustrate an example motor assembly according to various embodiments;
FIG. 5 illustrates an example motor assembly comprising three motors that are aligned on mutually perpendicular axes according to various embodiments;
FIGS. 6A, 6B, 6C, and 6D illustrate various example applicator and coating reservoir configurations;
FIG. 7 illustrates an example interaction that can be utilized in various embodiments;
FIG. 8 illustrates an example display layout provided on a touch screen in accordance with various embodiments;
FIGS. 9A and 9B illustrate an example device utilizing a mirror assembly to reflect a camera's field of view onto a surface;
FIGS. 10A, 10B, and 10C illustrate example devices in accordance with various embodiments;
FIGS. 11A and 11B illustrate example embodiments using a stand and a finger positioning aid;
FIGS. 12A, 12B, 12C, 12D, and 12E illustrate example embodiments of the invention where a circular positioning aid is attached to a stand;
FIG. 13A, 13B, and 13C illustrate an example technique for connecting a portable electronic device to a stand;
FIG. 14 illustrates an example masking apparatus;
FIG. 15 illustrates an example network environment in which aspects of the various embodiments can be implemented;
FIG. 16 illustrates a method for applying coating to a surface of a nail.
FIGS. 17A and 17B depict an example system with a covering.
FIGS. 18A, 18B, and 18C depict an example system where two portions can connect together for protection and storage when not being used.

### DESCRIPTION

Various embodiments of the disclosure are discussed in detail below. While specific implementations are discussed, it should be understood that this is done for illustration purposes only. A person skilled in the relevant art will recognize that other components and configurations may be used without parting from the scope of the disclosure as defined in the appended claims.

The disclosed technology addresses the need in the art for a device to efficiently paint people's nails.

As used herein, the term "user" shall be considered to mean a user of an electronic device(s). Actions performed by a user in the context of computer software shall be considered to be actions taken by a user to provide an input to the electronic device(s) to cause the electronic device to perform the steps embodied in computer software. In some instances a user can refer to a user account associated with a particular electronic device.

As used herein, the term "nail" shall be considered to refer to fingernail(s) and/or toenail(s).

As used herein, the term "digit" shall be considered to refer to a finger or a toe.

As used herein, the terms "paint," "decorate," "apply," and "print" can generally be used interchangeably to refer to affixing a coating or decorative material to a nail.

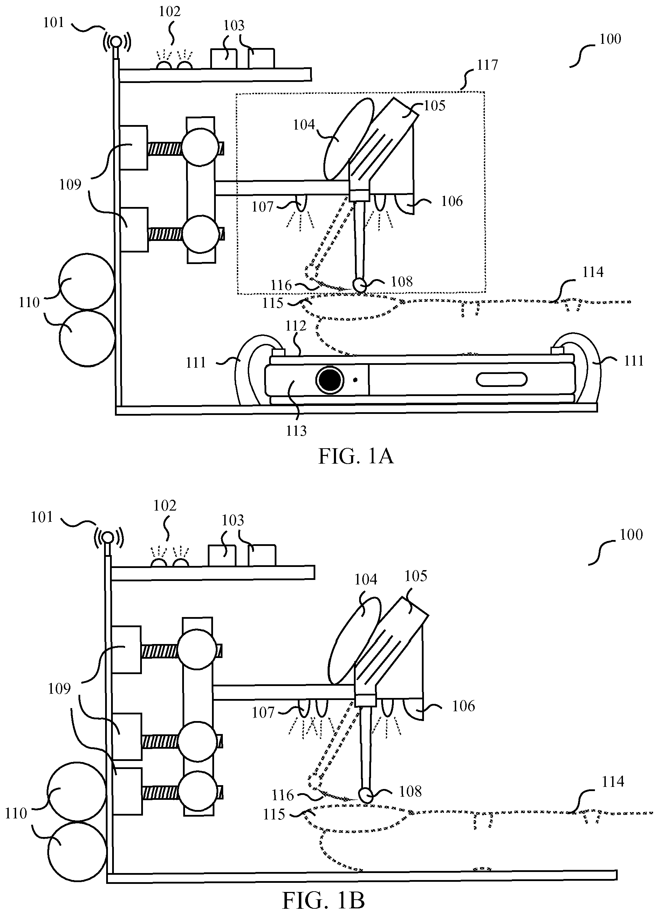

**FIG. 1A** illustrates an example nail coating system 100 including a portable electronic device 113. The system 100 can utilize motors 109 to move an applicator assembly 117. Combining portions of the system 100 into a single form factor can result in a "nail painting robot" The applicator assembly 117 can have LEDs 107 to illuminate the surface of a nail 115 for an imaging system (camera) 106. Also on the assembly, there can be coating reservoir 105 with an attached extraction mechanism 104. The system 100 can have a communications interface 101 for any type of wired, wireless, or other connectivity. The system 100 can have interactivity with LEDs 102 and buttons 103. A power source 110 can be internal such as a battery, external such as a wall plug, or a combination of the two. In some embodiments, the power source is a connected portable electronic device 113. In some embodiments, the power source 100 can be rechargeable.

In some embodiments the system 100 is a standalone device which includes some or all of features disclosed herein. For example, the system 100 can include a touch surface 112 with integrated display, external connectivity, a camera 106, and a light source. However, it should be understood that many of these features can be found in common portable electronic devices. It can be useful for the system 100 can take advantage of the features of a connected portable electronic device already available and familiar to a user. The portable electronic device can be electronically connected to components of the system 100 through various means. The connection via the communications interface 101 can be bidirectional or unidirectional and consist of via a physical cable, NFC, RFID, Bluetooth, WiFi, infrared, visible light or any other means known to transmit data in the art. The connected portable electronic device can thus expand the functionality of the system 100.

The portable electronic device 113 can be used to detect the position of the finger 114 and nail 115 to more accurately guide the applicator 108. The portable electronic device 113 can also serve as an additional interface, displaying information and receiving input from a user.

The portable electronic device 113 can have a touch sensitive surface (touch surface) 112 that can detect the position of the finger 114 and nail 111 to more accurately guide the applicator 108 as well as receive input for the system 100. The touch surface 112 can utilize a variety of touch screen technologies known in the art to detect the position of a user's finger. The touch surface 112 may be configured to detect multiple inputs ("multi-touch") or a single input. The touch surface 112 may detect pressure and force through various means. The touch surface 112 can have gesture-recognition capabilities.

The touch surface 112 can be integrated with a display. The display can be LED, OLED, LCD, or other display technologies known in the art. The display can be monochromatic or color. The touch surface 112 can be transparent and coupled with the display thus creating a touch screen device as is known in the art. The display can thus become an interface for the system 100.

A cradle 111 is depicted in FIG. 1A as a system of mechanical armatures to hold the portable electronic device. It should be understood that any technique that prevents slippage of the device 113 can be utilized. For example, a surface with mild adhesive properties, a silicon portion, rubber pads, or small ridges that form guides to hold the edges of the device. In some embodiments, the cradle 111 can align with a part or parts of the portable electronic device 113 which can allow the system 100 to determine the relative position of the touch surface 112 to the applicator 108. In some embodiments, the cradle 111 can determine certain characteristics and/or measurements of the portable electronic device 113. This can enable the system 100 to estimate the brand and model of the portable electronic device 113. By combining measurements from the touch surface 113 with information pertaining to the touch surface 113's relative location to the portable electronic device 113 and measurements pertaining to the portable electronic device 113's relative location to the system 100, the system 100 can determine the nail's relative location to the applicator 108.

The system 100 may include a special cover or film (not shown) to apply or place upon the touch surface 112 to protect it from errant splatter from the nail coating process. This cover or film may be designed to preserve the touch surface 112 ability to detect user input. This cover or film may also be designed to be transparent thus allowing a display coupled to the touch surface 112 to be visible through the cover or film. The cover or film may use adhesive or static electricity to bind with the touch surface 112. The cover or film may also be designed to be a protective covering to prevent scratching or breakage of the touch surface 112.

The coating reservoir 105 can be refillable or consumable. The system 100 can hold multiple different coating reservoirs at the same time. In some embodiments, the coating reservoir 105 snaps into place. The coating reservoir 105 can have an authentication system to prevent the use of unlicensed reservoirs. The coating reservoir 105 can have a registration system so that the system 100 can detect and record the use of the coating reservoir 105. In some embodiments, the authentication system and registration system use the same components. The authentication/registration can be physical (e.g. a proprietary lock or special fitting) or electronic (e.g. an encrypted ID or code). In some embodiments, the coating reservoir 105 has a QR code, bar code, NFC/RFID tag, etc. that provides authentication/registration. In some embodiments, purchases of coating reservoir 105s are recorded at the point of sale and communicated to the system 100 as authorization/registration for the system 100 to accept and use the purchased coating reservoir 105.

The coating may be nail polish or ink of various types, colors, and textures. The coating may be contained in the coating reservoir 105. The coating may be a "pre-print," a "base coat," a "top coat," gel, and/or matte. Multiple coatings may be used in succession for varying effects. In some embodiments, the user is instructed to apply a coating manually. For example, the system 100 can instruct the user to apply a pre-print coat manually before using the system 100 to apply other coatings. The applicator 108 may also combine coatings to create a new coating. This can be especially useful in creating coatings of various colors, designs, and textures. The coating can also be a nail polish remover. The coating may also form a hard material when deposited on the nail. The hard material may be a plastic, resin, or ceramics similar to those used in the art of 3D-printing.

In some embodiments, the extraction mechanism 104 is a, piston, lever, or rotating cam that will apply pressure to the coating reservoir 105.

An applicator 108 can be used to apply a coating on the nail 115. The applicator 108 can have various areas of effect. For example, the applicator may apply coating to the entire nail at once, a smaller region of the nail, a narrow line, or a small point. The application zone is the area where the applicator can, as positioned, apply coating. If the applicator 108 does not apply coating to the entire nail at once, the relative location of the nail 115 to the applicator 108 can be progressively adjusted so that the applicator 108 can apply coating to every desired portion of the nail. For example, if the applicator 108 applies a line of coating at a time, the nail may move relative to the applicator 108 to achieve complete coverage. The applicator can receive an applicator control instruction effective to dispense coating from the applicator.

The applicator 108 can be a brush as depicted in FIG. 1A. The brush can be made of bristles, foam, or felt. Alternatively, the applicator 108 can have a nozzle to spray or dispense coating, an example being an inkjet head. The applicator 108 can be consumable having a limited number of uses. The applicator 108 can be easy to replace or change. The coating reservoir 105 may be external to the applicator 108 or joined with it.

The applicator 108 can be static or can be moved by a motor assembly 109. The motor assembly 109 can have at least one motor that can move the applicator 108 linearly across the nail or perpendicular to the surface of the nail. Alternatively, the motor assembly 109 can include at least one motor designed to change the direction of the applicator 108, resulting in an angular motion as illustrated in 116 in FIG. 1. It should be understood that a combination of motors providing angular and linear movement can ensure accurate and efficient nail coverage. Additionally, the motor assembly 109 can move the camera 106, applicator 108, coating reservoir 105, and light sources 107, or any combination thereof.

In some embodiments, the applicator 108 can place stickers, plastic covers, gems, or other ornamentation on the nail 115. In some embodiments, the items on the foregoing list can be created within the system 100 (e.g., the system 100 prints the sticker before placing it) as well as external to the system 100 (e.g., the system 100 can accept a cartridge of rhinestones). In some embodiments, the applicator 108 can apply a coating on a sticker which can then be applied to a nail; in other embodiments, the applicator 108 can apply a coating on a nonabsorptive surface which can then be pressed upon a nail to transfer the coating.

In some embodiments, the device uses a camera 106. The camera 106 can be any device capable of creating an image of the nail. For example, the camera 106 can be grayscale, color, infrared, etc. The camera 106 can have a high resolution or low resolution (smaller than 1 megapixel). A higher resolution can increase accuracy of analysis while a lower resolution can increase processing speed while decreasing power requirements and cost The camera 106 can be configured to capture a sequence of images or a single still image. It can also have a fixed focal range or a variable focal range. If it has a variable focal range, it may be programmatically or manually controlled. Similarly, the camera 106's field of view may be fixed or variable with programmatic or manual controls. In some embodiments, motors are used to adjust the direction or location of the camera 106. These motors may be specific to the camera 106. Alternatively, if the camera 106 is attached to the applicator assembly 117, the motor assembly 109 can provide such functionality. In some embodiments, the camera 106 can be configured to record depth data with an image. A camera 106 thus configured can produce a three-dimensional model of a finger 114.

In some embodiments, a light source 107 is used to assist the camera 106's functionality. The light source 107 may be any type known in the art. The light 107 source can be located a distance apart from the camera 106 in order to enhance contrast in the resulting image. Higher contrast in the image can assist edge detection algorithms. Multiple light sources 107 spaced apart may be used, either simultaneously or sequentially. Because a light creates shadows from the contours of a finger, imaging techniques can use multiple images corresponding to different light sources 107 and approximate a 3D model.

In some embodiments, the system 100 contains a dryer mechanism (not pictured) to speed up the nail drying process. The dryer may utilize a UV lamp, other radiant heat sources, and/or a fan directed at the nail. Using a UV lamp can "cure" types of coatings that require curing. The dryer mechanism can be the same light source 107 used to assist the camera 106. The dryer mechanism can be detachable from the system 100.

In some embodiments, the system 100 can broadcast the nail coating session. The broadcast can include a video screen capture of the portable electronic device 113, as well as audio and images from the camera 106. The audio can come from the portable electronic device 113 or be located elsewhere in the system 100. Thus configured, the system 100 can facilitate a user to host virtual and live "nail parties" with remotely connected users. The system 100 can use video conferencing technology to output audio and/or video from the remotely connected users to the local user.

In some embodiments, the system 100 can provide users an option to purchase items. For example, the system 100 can recommend purchase of an applicator 108, coating reservoir 105, motor assembly 109, power source 110, cradles 111, dryers, etc. upon detecting that a component is ready to be replaced or an updated version is available. Purchases can be made using money (including virtual currency such as Bitcoin etc.), points (as described herein), or a combination thereof. Items for purchase can be branded items, for example they could branded according to a popular movie or musician. In some embodiments, a user can be given instructions on how to make custom parts using, for example, a 3D printer. Items external to system 100 can be purchased as well, including, stickers, cards, shirts, mugs, phone cases, headbands, pants, shoes, toothbrushes, hair dryers, sweaters, jewelry, fitness trackers, etc.

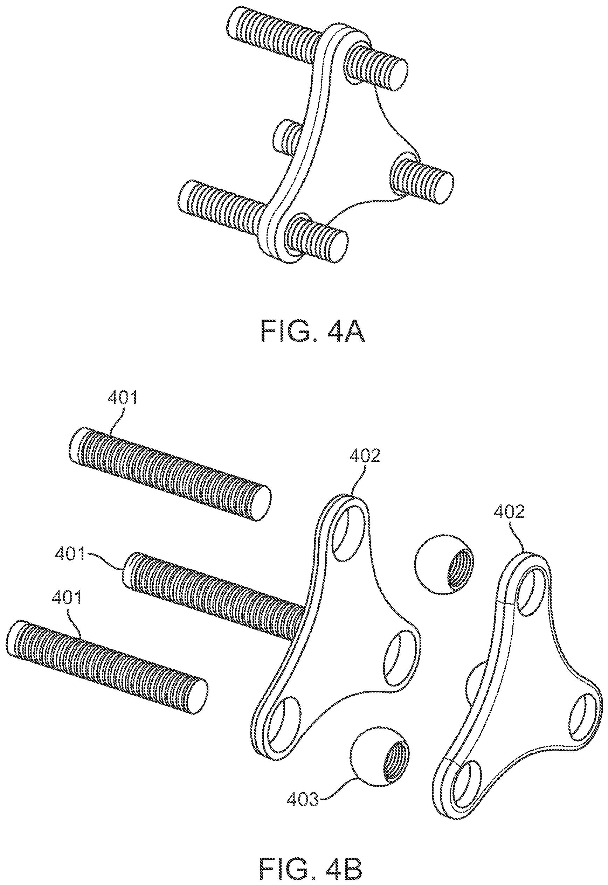

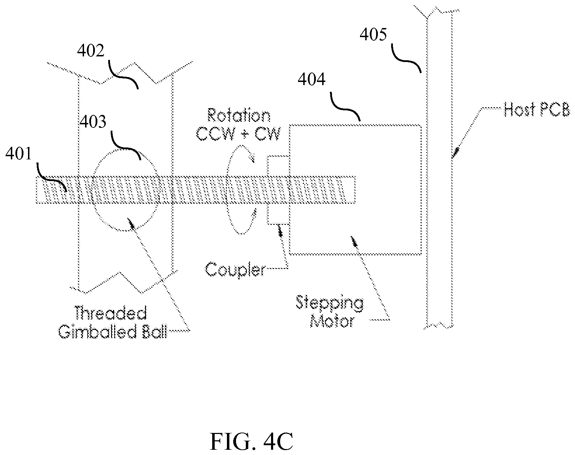

As illustrated in **FIG.1B****,** some embodiments operate without the portable electronic device 113 being physically attached to the system 100; in those embodiments, the cradle 111 can be omitted. Furthermore, some embodiments utilize three motors in the motor assembly 109. This motor assembly 109 configuration is illustrated further in FIGS. 4A, 4B, and 4C.

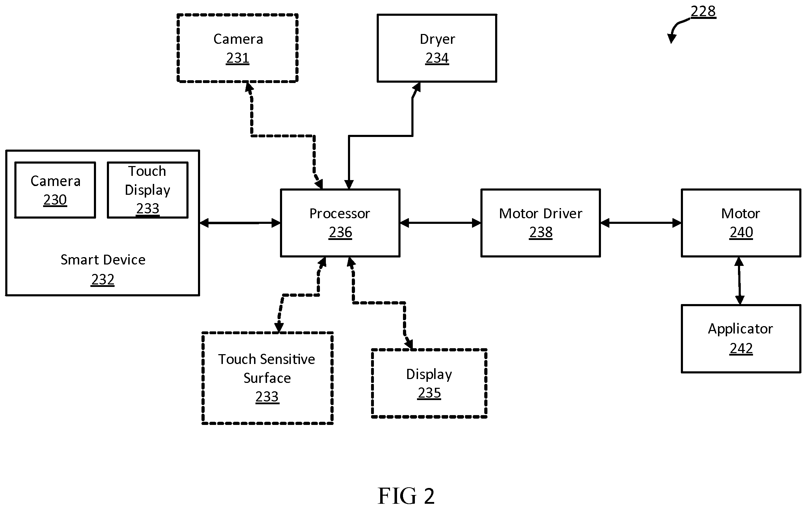

**FIG. 2** illustrates an example block diagram of the systems shown in FIGS. 1A and 1B. Each embodiment of system 228 includes at least a processor 236 for executing software and applications, and sending instructions to the various components of the system, and an applicator 242 for applying ink, polish, or other material to a nail. All other system components, can be included, or not, or their configuration within the system can vary depending on a specific embodiment.

In some embodiments, system 228 can make use of hardware in a smart device 232 such as a smartphone or media player, or any other device having a touch sensitive display 233 and camera 230. In such embodiments, the smart device 232 can be utilized for finger location detection, and finger boundary detection by utilizing an application stored on the smart device 232 that learns the location of a nail utilizing the touch sensitive display 233, and then can image the nail using a camera or other image detection system that is integral to the smart device. The processor 236 can communicate with the smart device 232 via a wired or wireless connection. The system 228 can also utilize the smart device for all other capabilities, including, but not limited to displays, communication, etc.

In some embodiments, the system 228 can include one or more of a camera 231, or touch sensitive surface 233, or display 235, separate from the smart device. In such embodiments, it can be possible to still utilize the smart device 232 for functions other than one or more of the camera, touch detection, or display, as described above.

In some embodiments, system 228 includes a drying unit 234, which can be connected via one way (open loop) or two way (closed loop) communications with the processor 236.

In some embodiments, the system 228 can include a motor(s) 240 and motor driver 238. These motor(s) can be used to translate the Applicator System into any orientation (XYZ or any combination or single set). The communication between the motor driver 238 and the processor 236 can be open or closed loop. The communication from the motor driver 238 to the motor(s) 240 can also be open or closed loop.

In some embodiments, system 228 can be a standalone solution. The system can include a user interface displayed on display 235, one or more cameras 231, and illumination system (LEDs, lasers, IR, etc) (not shown). In such embodiments processor 236 can communicate with smart device 230, and manage commands from the smart device 230.

In some embodiments, applicator 242 comprises an ASIC for inkjet printing. The processor 236 can communicate with the applicator 242 to eject substance, ink or polish, etc., from a nozzle.

In some embodiments, applicator 242 comprises a motor driver and one or more motors that can move one or more cams to press against a "POP" or cartridge to dispense substance, ink or polish or other, thru a nozzle, which can be a plain hole, a brush, a foam tip, etc.

In some embodiments, applicator 242 comprises a motor driver and one or more motors or solenoids. The motors or solenoids can pump a substance, from a reservoir, through a nozzle or tip. The motors or solenoids could also use compressed air to push the substance, from a reservoir, thru a nozzle or tip, etc.

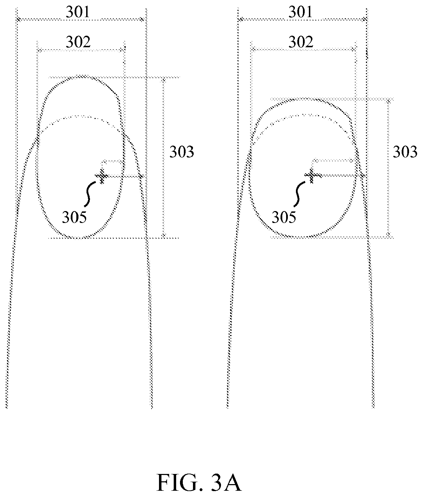

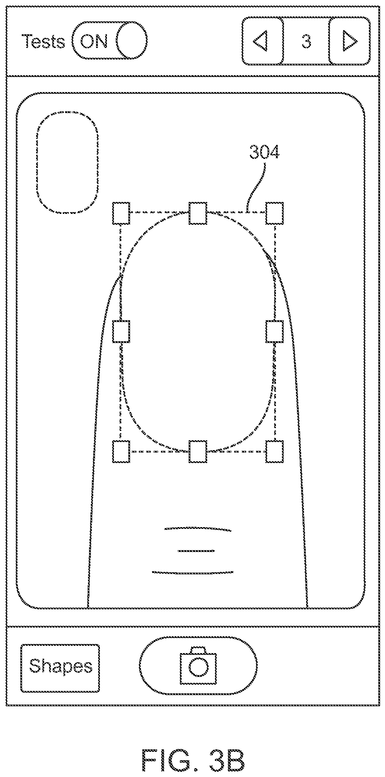

**FIG. 3A** depicts the measurements that can be used to describe the nail and finger. The finger has a total width 301, while the nail has a width 302 and length 303. **FIG. 3B** depicts an example where the outline of the nail 304 is shown as an overlay on an image of the finger. The outline of the nail 304 is determined by the system 100 by analyzing the captured image of the nail from the camera. In some embodiments, the analysis is done with an edge detection algorithm. In some embodiments, the user assists the system 100 by adjusting the image or outline 304 until they match. In some embodiments, the user moves their finger until the image of the nail lines up with a static outline 304.

Typically, when a user places their finger on a touch surface 112, the touch surface reports the centroid 305 of the contact area. This centroid 305 might be in a different location for each finger, therefore the system 100 can gain greater accuracy by determining the centroid 305's position relative to the nail. Once the centroid 305's location is determined, the system 100 can, using the reading from the touch surface 112, predict the location of the nail.

**FIG. 4A** depicts an example portion of the motor assembly 109. The primary purpose of the motor assembly 109 is to drive the applicator assembly 117 in the X, Y, and Z planes by rotating the threaded shafts 401. **FIG. 4B** depicts an exploded view of FIG. 4A. The motor assembly 117 can comprise two pliable sections 402 with holes for the threaded shafts 401. When connected, the plates 402 can form an enclosure for gimbaled and threaded nuts 403. The nuts 403 can be generally spherical and can be seated within spherical cutouts in the two pliable sections 402. There can be a notch on the nuts 403 to prevent the nuts 403 from rotating. Thus configured, rotations of the threaded shafts 401 can produce movements of the applicator assembly 117 in X, Y, and Z directions. **FIG. 4C** depicts a cutaway view of FIG. 4A where the threaded shafts 401 are connected to an example stepping motor 404 attached to a PCB 405. The threaded shafts 401 can be attached to stepper motors. The stepper motor 404 can rotate the threaded shaft 402 which will in turn move the associated threaded gimbaled nut 403 towards or away from the motor 404. The applicator assembly 117 can be attached to the plates 402. Although a stepper motor 404 is depicted, various types of motors or actuators can produce similar functionality.

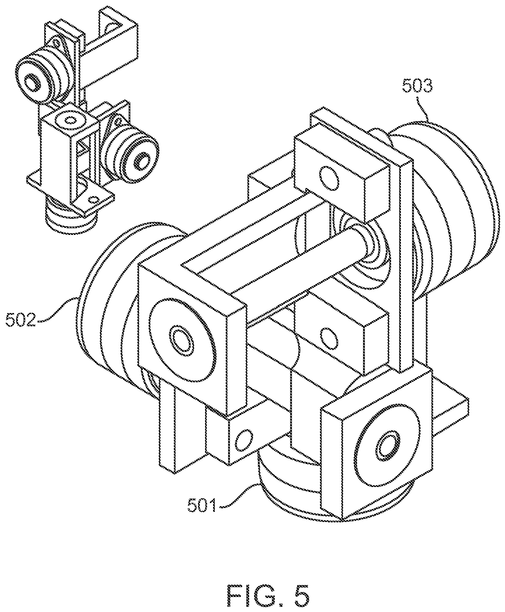

**FIG. 5** depicts an example motor assembly 109 configuration. In some embodiments, as depicted, each motor with its respective threaded shaft can be oriented along a different axis. In this configuration, a first motor 501 and shaft can be attached to a PCB or housing 405. A second motor 502 can be attached to the first motor's shaft so that the first motor 501 can move the second motor 502 along the first motor's shaft. A third motor 503 can similarly be attached to the second motor 502's shaft so that the second motor 502 can move the third motor 503 along the second motor502's shaft. The applicator assembly 117 can then be attached to the third motor 503's shaft and similarly moved.

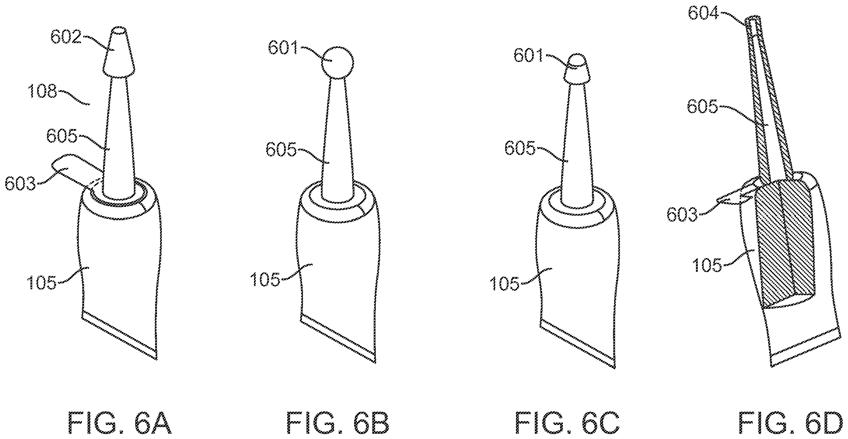

The applicator 108 can be combined with the coating reservoir 105 as exemplified in **FIGS. 6A, 6B, 6C,** and **6D****.** Various tips 601 can be at the end of a neck delivery tube 605. The tips 601 can vary in shape, for example FIG. 6B depicts a more spherical tip 601 while FIG. 6C depicts a more conical tip 601. The tips 601 can be made of different materials such as foam, felt, plastic, etc. In some embodiments, the tip is permeable and allows the coating to pass through the material; alternatively, the tip 601 can be impermeable but with an aperture through which the coating can pass. In some embodiments, the applicator 108 can have a threaded end 604 for a cap 602 and/or tips 601. Using different tips 601 can facilitate various designs, for example, a more rounded, thin tip can be used for polka dots, while a slanted tip can be used to paint the thin white lines needed for French manicures. The cap 602 can be used to seal off the coating reservoir 105 in order to prevent unwanted drying, leaking, or contamination.

In some embodiments, a cap 602 can be moved onto the applicator 108 between uses, thus preventing the coating from drying out. This can be done with or without user instruction. It should be understood that although a cap 602 is depicted, any type of resealing method or device can be used including a flap, adhesive tape, a screw (that might force an aperture to close), zipper mechanism, etc.

A removable seal 603 can be used to seal the coating reservoir 105 to prevent leakage and keep the coating from drying out during transport. When a user wishes to use the product, they can remove the seal 603 which can then allow coating to flow from the reservoir 105 to the applicator 108.

In some embodiments, the reservoir is a flexible pouch and pressure from an extraction mechanism 104 can force discharge of the coating. In other embodiments, the coating reservoir 105 is generally rigid, except for one side which can slide to decrease the volume in the coating reservoir 105.

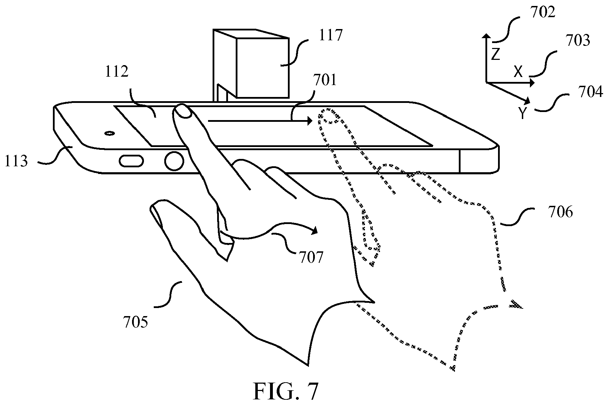

**FIG. 7** depicts a user getting their nail coated by making a motion 701 across the surface of a touch screen 112 on the device. In some embodiments, a fixed applicator assembly 117 is used as shown. As previously explained, an applicator 108 may not have complete coverage and may require relative motion to the finger to cover the entire nail. If the applicator assembly 117 is fixed the finger can be moved 701 to achieve full coverage. In some embodiments, the system 100 can determine the delay from when an instruction to deposit coating is transmitted to when coating reaches the surface of the nail. Using such delay information combined with information pertaining to the finger's position, direction of motion, and speed, the system can determine an appropriate time to transmit the instruction to apply coating so that it hits the intended portion of the nail. The applicator assembly 117 can be connected to a portable electronic device 113. The portable electronic device 113 having a touch surface 112 with an integrated display 112 oriented along the X-Y (703-704) plane. The applicator assembly 117 can be positioned above the touch surface 112 a distance along the Z axis 702.

In some embodiments, a user can move their finger across the touch surface 112 along the X axis 703 from one position 705 to another 706 so that the finger passes under the applicator assembly 117. The touch surface 112 can detect the location of the finger as it moves and direct the applicator assembly 117 to dispense coating when the nail is in the correct placement on the touch surface 112. The touch surface 112 can detect which portion of the nail is under the applicator 108 and the applicator 108 could dispense the appropriate coating on that portion of the nail. Because the touch surface 112 might not provide the precision required for certain coatings, a camera 106 can be utilized to more accurately determine the relative position of the nail.

As an alternative to the straight motion 701, the display can direct the user to follow a non-linear travel path ("flightpath") 707 across the touch surface 112. This can enable creative designs through non-linear application. In some embodiments, a user can be instructed to practice certain flightpaths multiple times until the user's movement reaches a degree of regularity required to effectively coat the nail. In addition to location information, flightpaths can include velocity information. For example, the flightpath may require the finger to move from A to B slowly and then to C rapidly. The system 100 can record and store a custom flightpath. The system 100 can facilitate the user sharing and downloading custom flightpaths. The flightpath can be combined with audio, visual, kinesthetic, or other sensory cues to further guide a user. Flightpaths can be downloaded from third-party applications.

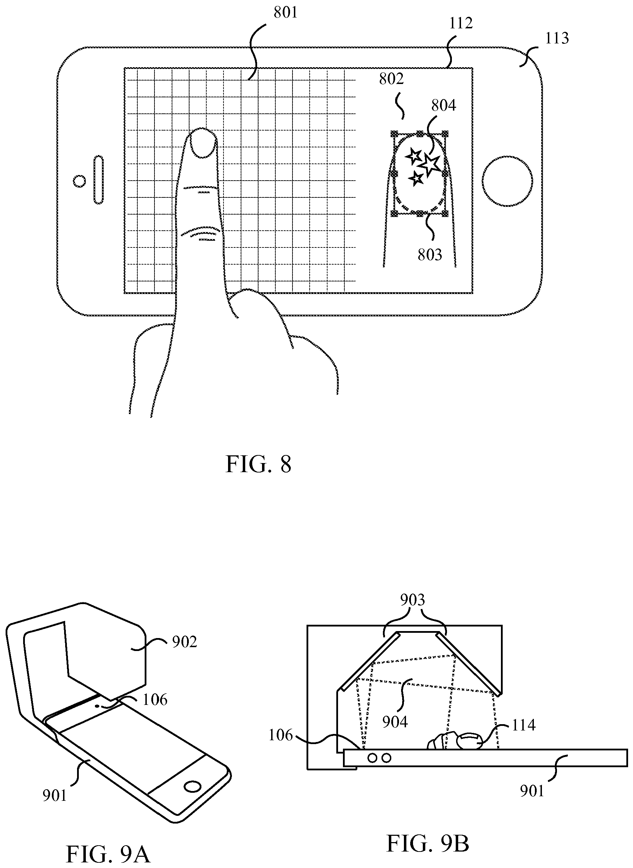

**FIG. 8** depicts one example use of a touch surface 112 in combination with an embedded display. Computer vision techniques can be aided by the use of contrasting backgrounds 801. In this example embodiment, the display can show a grid background 801 which can provide contrast to the finger. The background 801 can also be a gradient, a pattern, a solid color or a video of similar properties.

In another portion of the display, information can be presented to the user 802. The display can show an image from the camera 106. The image can have an overlay showing a detected outline of the nail 803. The image can have an overlay showing the user where they should place their finger. The overlay could be an outline of a generic finger or a crosshair. The image can present a rendering or preview of what a selected coating or design may look like on the nail 804. This would facilitate a user "trying on" various designs and colors before applying them to their nail.

In some embodiments, a portion of the display can show content to entertain the user while they are getting their nails done.

**FIGS. 9A** and **9B** depict using a mirror assembly 902 to reflect a portable device's camera 106's field of view 904 towards the surface of the portable device 901. The mirror assembly 902 can be used combination with a portable electronic device 901 to reflect light from the touch screen of the device back to a "front-facing" camera 106 on the device. The dashed lines indicate the field of view 904 of the camera 106. Using a mirror assembly 902 enables the camera 106 to capture an image of a finger 114 placed upon the touch screen of the device. The mirror assembly may consist of one mirror or a combination of mirrors 903. The mirror assembly 902 may have at least one lens to assist with providing a desired image to the camera 106. Manual or programmatic controls may be utilized to adjust elements in the assembly. In some embodiments, the mirror assembly 902 is combined with the applicator assembly 117.

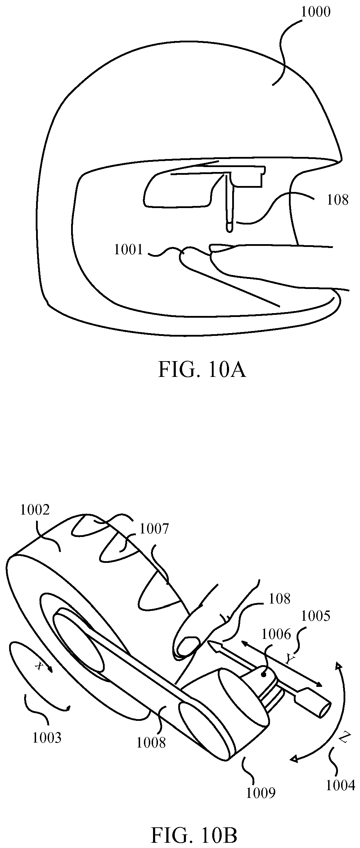

**FIG. 10A** shows an example embodiment 1000 where a cradle 1001 is used to hold a user's finger in place under the applicator 108. This can be an alternative to the touch surface 112 as described in other embodiments. The cradle can have a sensor to detect the presence of a finger. While the finger is in place, the applicator 108 can move to coat the surface of the nail.

**FIG. 10B** shows an example embodiment emphasizing combining different techniques to move the applicator 108 relative to the nail. In some embodiments, a dial 1002 with indentations 1007 for placing fingers is attached to an armature 1008. An applicator assembly 1009 is attached to the distal end of the armature 1008. The applicator 108 can be moved linearly along the Y axis 1005, thus setting the distance of the applicator 108 above the nail. In some embodiments, the Y height 1005 can be manually adjusted. Alternatively, a motor can control the Y height 1005. The applicator 108 can be rotated about an axle 1006 corresponding to angle Z 1004. The armature 1003 can rotate relative to the dial corresponding to angle X 1003.

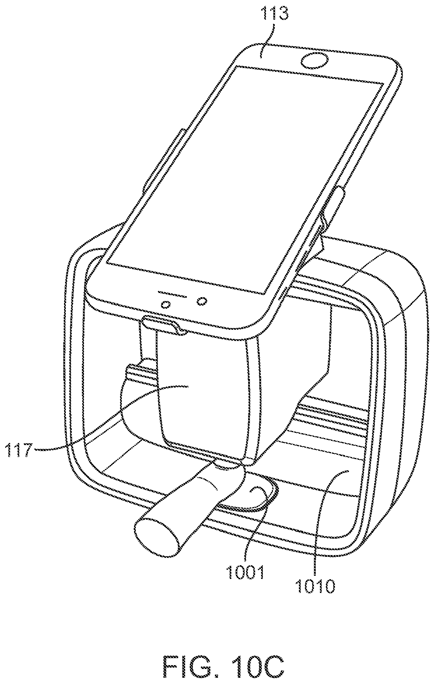

**FIG.** 10C shows an example embodiment similar to FIG. 10A in that a cradle 1001 to hold the finger in place is utilized. In some embodiments, the applicator assembly 117 can back and forth along a track 1010. In this example configuration, the portable electronic device 113 is used to display information to the user and receive input even though it's touch surface is not used to guide the system. The portable electronic device 113 can either be in a portrait configuration (as shown) or in a landscape configuration.

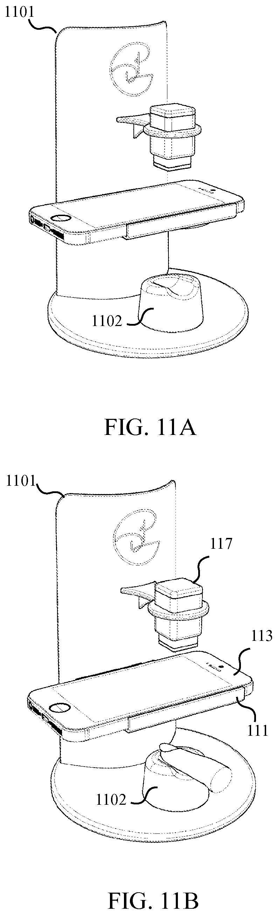

**FIGS. 11A** and **11B** illustrate an example embodiment using a stand 1101 and a finger positioning aid 1102. Thus configured, the finger can be within the field of view of the portable electronic device 113's camera.

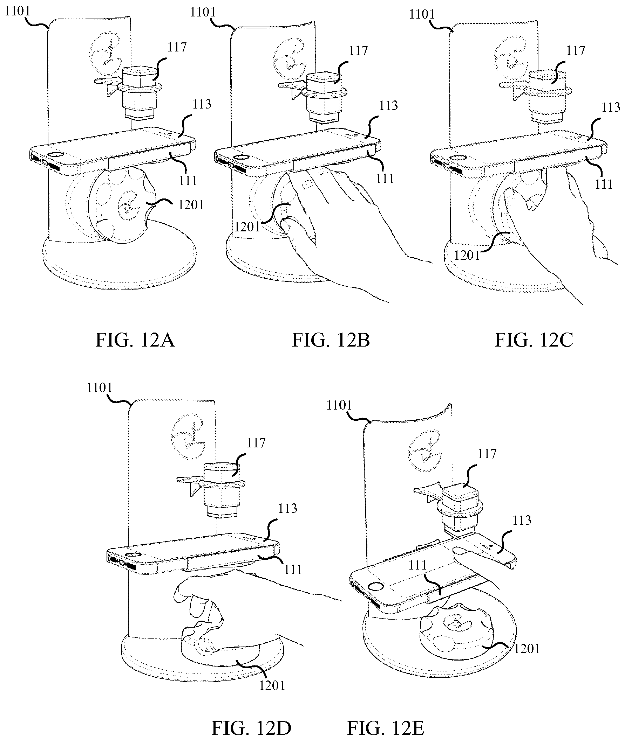

**FIGS. 12A, 12B, 12C, 12D, and 12E** are similar to FIGS. 11A and 11B except the positioning aid is a disk 1201 with an indention for each finger. FIG. 12A represents the disk positioning aid 1201 below the portable electronic device 113 which is connected to a base 1101 via a cradle 111. Positioned as such, the disk 1201 can be within the field of view of the portable electronic device 113's camera while the portable electronic device 113 is positioned under the applicator assembly 117. In some embodiments, the disk 1201 can rotate. For example, in FIG. 12B, the user's hand is in one position while in FIG. 12C the hand is in a different position. The disk 1201 can also be stationary. As a finger is within the field of view of the portable electronic device 113's camera, the camera can capture an image for use in image analysis techniques and visualizations described herein. While FIGS. 12A, 12B, and 12C depict the disk 1201 as parallel to vertical portion of the base 1101, the disk 1201 may also be connected so that it lies parallel to the portable electronic device as depicted in 12D and 12E.

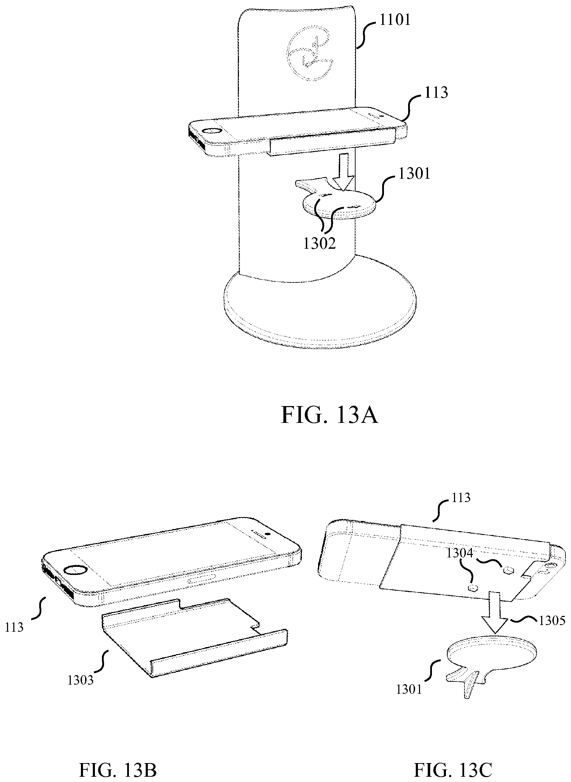

**FIGS. 13A, 13B,** and **13C** illustrate an example technique for connecting a portable electronic device 113 to a stand 1101. The cradle 111 featured in many embodiments can be implemented using this technique. The portable electronic device 113 can be affixed to a case 1303 with connection posts 1302 which can snap 1305 into fittings 1302 of a mount 1301 connected to a stand 1101. In some embodiments, the case 1303 can be designed to be semi-permanent, imparting protective or decorative properties to the portable electronic device 113.

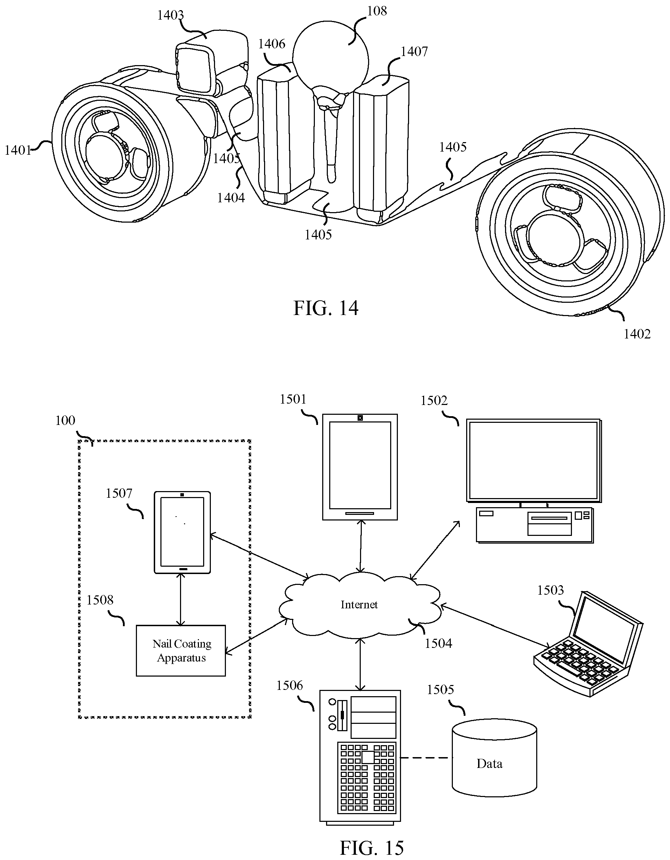

FIG. 14 depicts a masking apparatus that can cut masks 1405 which can prevent coating from being applied outside of the bounds of the nail or the bounds of a design. The mask 1405 may be used to form shapes and designs on the nail. In some embodiments, tape 1404 coming from a tape reel 1401 is fed through a cutter 1403 which cuts the mask 1405 to a desired shape and size, then fed under tension and stabilizing supports 1406/1407, crossing the path of the applicator 108, and to a receiving reel 1402. In some embodiments, the cutter 1403 is motorized to move perpendicular to the tape 1404's direction of travel. In some embodiments, the mask remains connected to the tape 1404, as shown in FIG. 14. Alternatively, the mask may be removed individually and placed on the finger. In some embodiments the mask 1405 uses adhesive to adhere to the surface of the skin or nail. The mask 1405 can fit the unique contours of a nail. The mask 1405 can be cut to fit a limited number of parameters to roughly fit a nail. For example, the mask can be cut according to a generic shape of a nail fitted to the unique length 303 and width 302 dimensions of the individual nail. The mask 1405 can be cut from a rolled strip of thin material 1404. The mask 1405 can hover above the finger, be mechanically applied to the finger, or the user can be required to place the mask 1405 themselves. In some embodiments, the masks 1405 are precut and the cutter 1403 is not required.

**FIG. 15** depicts a system map of device interconnectivity using the internet 1504. Although the internet 1504 is shown, it should be understood that any medium or topology to connect devices known in the art can be used. This example system contains a nail coating apparatus 1508, cell phone 1507, tablet computer 1501, desktop computer 1502, laptop computer 1503, and a server 1506 containing a database with data 1505. In this example system, the nail coating system 100 comprises the nail coating apparatus 1508 and cell phone 1507. The nail coating apparatus 1508 can connect to the server 1506 directly through the internet 1504, by means of a device such as a cellular phone 1507, or not have a connection to the server 1506.

In some embodiments, the server 1506 hosts a social network or platform whereby users can share and download nail designs. Users can share nail coating formulas, wherein the formulas comprise instructions for combining and sequencing various coatings. The formulas can also comprise timing information indicating a delay between coats or a length of time a coat should cure. The camera 106 can be used to capture an image of a coated nail to be presented along with the formula on the server 1506. Users can use the platform to share content from the system 100. The server 1506 can be a part of a social networking platform for users to share and collaborate. Users can access the platform to purchase and sell designs and formulas. In some embodiments, third party applications can interact with the nail coating system 100 through an API. The server 1506 can send instructions to the system 100.

In some embodiments, the camera 106 can capture an image of a nail. The system 100 can then attempt to duplicate the color and/or design onto the user's other nails. A system thus configured can enable a user to paint one nail manually and then use the system 100 to copy the color and/or design to the other nails.

In some embodiments, a platform can be hosted on the server 1506. In some embodiments, the platform can be run locally on the portable electronic device 113. A portable electronic device 113 can download an app and then prompt a user to input contact information for registration with the app. The server 1506 can maintain a database 1505 of user avatars, images, movement screens, designs, patterns, logos, animations, text, fonts, and other data that can provide or enhance functionality herein disclosed.

In some embodiments, the gallery can be categorized based on various features including objects depicted, literal interpretation, secondary objects depicted, words used, feelings or phrases commonly associated with the art, the art's owner, or geography of origin of art.

In some embodiments, the server 1506 can record rankings users place on art. The platform can be configured to accept a gesture such as a swipe, tap, click, zig-zag, etc. signifying approval, indifference, disapproval, and/or tiered rankings.

The platform can be configured to allow users to share art, portions of art, and/or galleries of art with other users within the platform and/or third-party networks. The platform can suggest categories, tags, and classifications for the sharing of posts, tweets, pins, blogs, and other content on platforms.

The platform can be configured to allow users to modify and/or combine art. In some embodiments, the user can be provided with a prefilled gallery of art from various sources, including user's device, the platform, third-party platforms, and the system 100. For example, the gallery can include photos pulled from the user's portable electronic device 113. The platform can then be configured to crop, adjust lighting settings, add colors/designs/text/images, rotate designs, scale designs, and add 3D and 2D animations to designs. The platform can also permit mixing multiple items to create new designs. In some embodiments, the platform can split an image into multiple pieces having a jigsaw puzzle shape. The platform can be configured to allow users, during the creation process, to post their draft image in order to receive feedback from other users through ranking, votes, polls, etc.

The platform can facilitate collaborative creation between multiple users. This collaborative creation can either be simultaneous or asynchronous.

The platform can detect and infringement of copyrighted material before, during, or after it is created and saved to a gallery. The platform can also detect unlicensed brand and affiliate partner logos.

The platform can categorize and classify users' created, edited, uploaded, and mixed art. The platform can log data including primary objects included in art, literal interpretation of art, secondary objects in art, words used in art, feelings/phrases commonly interpreted by the work of art, the art's owner, geography of origin of art, popularity of artist and/or of similar art.

The platform can import images, friends, logos, preferences, and tags from third-party apps as well as the portable electronic device 113's camera roll. The platform can store art on the cloud, locally on the app, locally on the portable electronic device 113, or locally on the system 100.

The platform can provide the user with the option to provide feedback, comments, or help on any functionality of the app or printing process. This option can be a button, sound, shape, logo, image, or other icon on the screen. Feedback can be shared through the platform and/or separately to the app host.

The platform can be store user profiles. The profiles can include data pertaining to the user's age, race, geography, portable interests, cultural interests, art interests, and/or fashion interests. The profile can include photographs, avatars, art, movement screens, audio, 3D animations and/or any other presentable media. The platform can allow users to upload data to their profile or select preconfigured art, avatars, etc.

The user profile can contain usage information from individual users. Usage information can include color/art preferences, a log of media consumption while using the platform, a log of coating reservoir 105s used with the system 100, and any other data that may be useful in describing the user's preferences or characteristics. The platform can utilize the information contained within the user profile to make suggestions and present targeted advertisements to the user. This functionality is especially useful when applied to the advertisement, sale, and use of consumables related to the system 100. For example, the platform could track purchasing habits and timely suggest to the user that he or she purchase a replacement coating reservoir before the one in use is depleted.

The platform can maintain a database of "points" for each user. These points can have value. The platform can increase or decrease a user's points based on various events. For example, the platform can award points to a user for uploading, combining, and sharing art, while the platform can penalize a user by removing points if a user uploads unacceptable, copyrighted, and fraudulent art. Points can be hidden from users or publicly displayed. Points can be awarded/ removed for activities that take place on third-party platforms. The platform can facilitate the exchange of points between users. Users can use their points to purchase art gallery streams, downloads, and prints. The platform can maintain multiple categories of points independently. For example, there can be points for platform engagement, community participation, and purchasing product. A user can have platform engagement points, community participation points, purchasing product points, etc. kept as distinct accounts.

The platform can connect multiple users to form "nail parties" where the connected users can share their screen as well as audio and video from their devices to the other users. In some embodiments, one user hosts the session and the other users connect to the host to view the host's screen as well as receive audio and video streams. The platform can maintain a calendar of planned nail parties as well as invited guests. The nail parties can have a theme. The platform can distribute points to the host and guests for various levels of participation in a nail party. A host can livestream their session to any number of known or anonymous users.

The platform can have an API through which third-party applications can connect to some or all of the functionality of the platform.

In some embodiments, the platform is connected with physical nail salons. In some embodiments, the platform can suggest supplementary care specific to the user's preferences; for example, the platform can determine that the nail may need professional maintenance after a determined number of coatings with the system 100, or the platform can suggest a salon to perform additional filing, cutting, pushing cuticles back, etc. In some embodiments, a salon can record the service provided to a customer (e.g., a French manicure) in the customer's user profile, thus enabling the platform to suggest a home maintenance schedule using the system. In some embodiments, the platform can communicate with the third-party system of a nail salon for booking, scheduling, advertising, etc. purposes.

The component registration system described herein can be used to track and record usage of parts of the system 100. For example, applicator 108, camera 106, motor assembly 109, etc. While registering an item, the system can determine the purchasing location, time of purchase, and the origin of the item. Such information can be used for targeted advertisements. Alternatively, such information can be transmitted to an external server so that the server can learn usage habits of users.

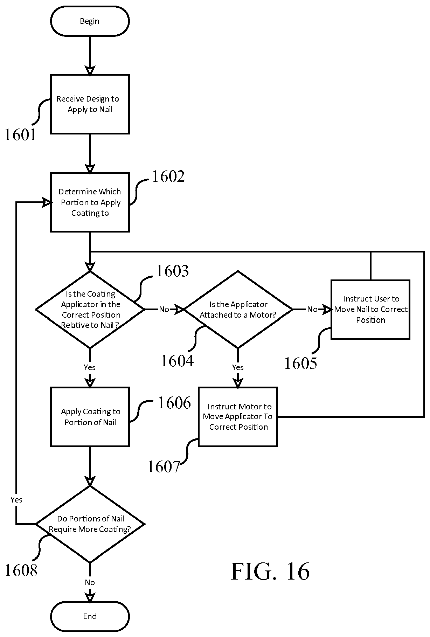

**FIG. 16** depicts a method for applying a complete coating to the surface of a nail. Software, after initialization, receives a design to apply to the nail 1601. Because the applicator 108 might not be able to apply full coverage to the nail at one time, the software can determine which portion of the nail to coat first 1602. This determination can be made by analyzing a captured image from the camera and starting on an edge of the nail. The determination can also be made by calculating an optimal path or set of paths to create efficient coverage of the nail. The determination can be dictated by a set of instructions on the system 100.

The software then determines the relative position of the applicator 108 to the nail and determines if the applicator 108 is in the correct position (1603). It can use the touch surface 112 or the camera 106 to accomplish this determination. If the nail or applicator is not in the correct position, and the applicator 108 is attached to a motor assembly (1604), the software can instruct motor(s) to move the applicator 108 to the correct position (1607). If the applicator 108 is not attached to a motor, the software can instruct the user to move the nail to the correct position (1605). After providing the move instruction, the software can determine if the applicator 108 is now in the correct position (1603).

When the software determines that the nail is in the correct position, an instruction is given to the applicator 108 to apply a coating to that portion of the nail (1606). After the coating has been applied, the apparatus can determine if more coating is required (1608). This determination 1608 can be made optically with the camera 106, with user input, or an open-loop control sequence. If more coating is required, the software can determine a new location to apply coating (1603), otherwise the process is complete. In some embodiments, the software can be configured to apply multiple coatings of the same or different coating.

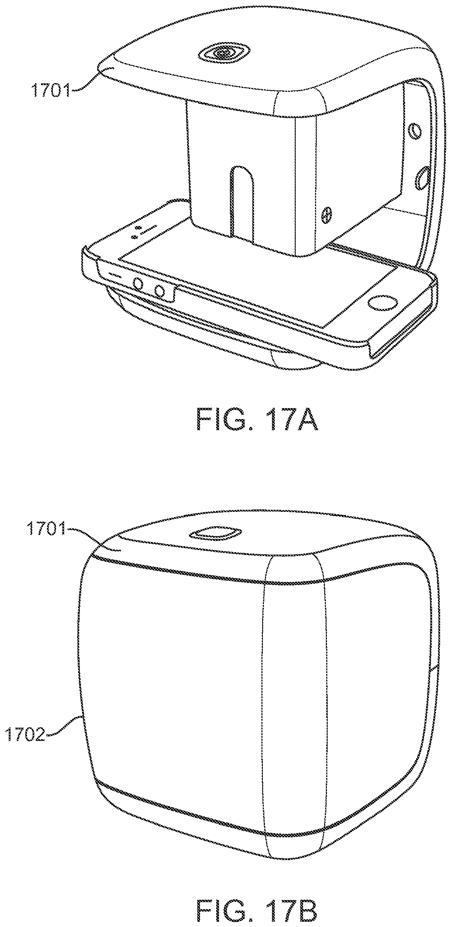

**FIGS. 17A** and **17B** depict an example system 100 where a covering 1702 can protect the contents of the main portion 1701 when not in use.

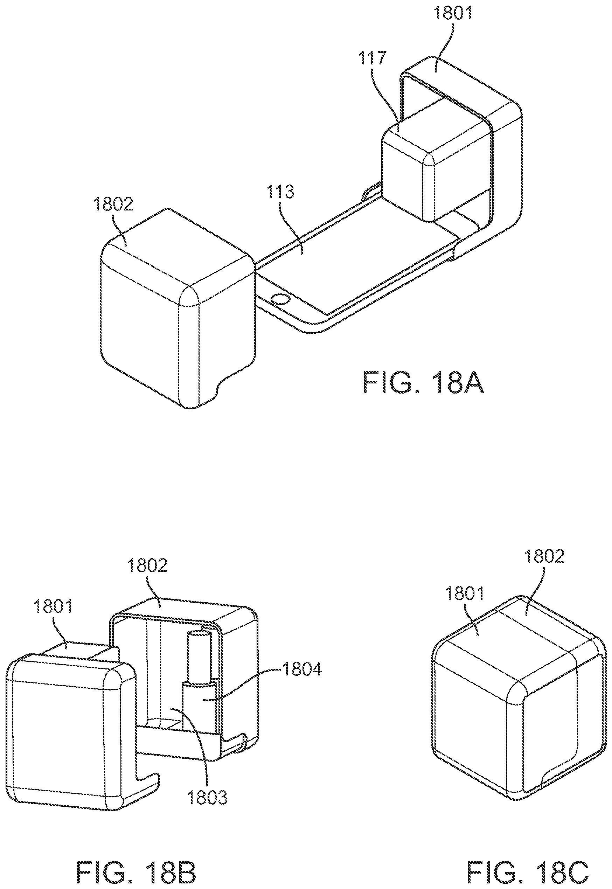

**FIGS. 18A, 18B,** and **18C** depict another example system 100 where two portions 1801 and 1802 can connect together for protection and storage when not being used. In this example embodiment, one portion 1801 houses an applicator assembly 117 and can stabilize the portable electronic device 113. The other portion 1802 can have compartments 1803 for storing items such as nail polish 1804, nail file, cuticle pushers, and other items associated with doing one's nails.

In some embodiments, as shown in FIGS. 17B and 18C, portions of the system 100 can connect to form a cuboid. This can protect the internal components while resulting in a small and portable form factor.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

For clarity of explanation, in some instances the present technology may be presented as including individual functional blocks including functional blocks comprising devices, device components, steps or routines in a method embodied in software, or combinations of hardware and software.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smartphones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

## Claims

1. A nail decorating system (228) comprising:
an imaging system (213, 232) for acquiring an image of a nail to be decorated;
a display (235) configured to display the image of the nail;
an applicator (242) which applies a coating onto the nail;
a processor (236) operatively coupled to the imaging system (213, 232), the display (235), and the applicator (242);
**characterized in that** the processor is configured to determine a nail travel path along which the nail should be moved relative to the applicator.

2. The nail decorating system of claim 1, wherein the applicator comprises one or more of:
(i) a tip that can impart coating on the surface of the nail when the tip touches the nail and a nozzle that can impart coating on the surface of the nail without requiring the tip to touch the nail; or
(ii) a fitting configured to receive a removable tip or is removably coupled to a coating reservoir that is removable; wherein:
the applicator is connected to a coating reservoir;
the applicator and coating reservoir are removable from the nail decorating system.

3. The nail decorating system of claim 1, wherein the processor is configured to further perform, one or more of:
depict a representation of the nail travel path on the display;
(i) instruct a user to practice the nail travel path without having the applicator apply a coating onto the nail;
(ii) detect that the user has a determined level of accuracy with respect to the nail travel path;
(iii) apply the coating onto the nail;
(iv) detect the nail travel path of the nail relative to the applicator;
(v) record the travel path data in memory of the nail decorating system.

4. The nail decorating system of claim 1, wherein the nail decorating system is connected to a network and the processor is configured to further perform one or more of:
detect a nail travel path of the nail relative to the applicator;
send data representing the nail travel path over the network;
receive, through the network, a nail travel path for which the nail should be moved relative to the applicator.

5. The nail decorating system of claim 1, further comprising:
one or more motors coupled to the applicator, wherein the processor is configured to control any of the one or more motor to move the applicator.

6. The nail decorating system of claim 1 further comprising:
threaded shafts connected to one or more motors; and
a pliable section with opening for the threaded shafts such that rotation of one of the threaded shafts moves a corresponding portion of the pliable section along the one of the threaded shaft;
wherein the pliable section's openings are formed to receive threaded nuts that can receive the threaded shafts;
wherein the nuts can rotate about axes perpendicular to the threaded shafts.

7. The nail decorating system of claim 1, further comprising, one or more of:
(i) a motor coupled to the applicator;
wherein the motor is configured to move the applicator linearly or to rotate the applicator about an axis;
(ii) a mirror arranged in a field of view of the imaging system; or
(iii) a dryer mechanism.

8. The nail decorating system of claim 1 further comprising:
a portable electronic device, wherein one or more of, the display, the imaging system and the processor are integrated with the portable electronic device.

9. The nail decorating system of claim 1, further comprising:
a portable electronic device, wherein the portable electronic device is physically contained in the nail decorating system; wherein the portable electronic device is configurable to depict a preview of the nail decorated by the nail decorating system.

10. The nail decorating system of claim 1, further comprising:
a touch sensitive surface configured to detect presence of a digit;
wherein, the imaging system is configured to record an image of the digit substantially in a field of view of the imaging system, responsive to detection of the presence of the digit by the touch sensitive surface;
wherein, the processor is configured to execute a set of instructions, the set of instructions, which when executed by the processor, causes the system to: analyze the image of the digit,
perform a machine vision technique to determine a boundary of a nail on the digit.

11. The nail decorating system of claim 10 further comprising:
a coating applicator configured to dispense a coating onto the nail in response to the processor determining that the coating applicator is in position, relative to the nail, to apply a coating;
a motor configured to:
move or manipulate the coating applicator into position, relative to the nail; or
move the imaging system into position, relative to the digit to bring the digit into the field of view; wherein, the motor is controlled by the processor;
wherein the touch sensitive surface detects a position of the digit on the touch sensitive surface, and communicates the position of the digit to the processor;
wherein the position is determined as it moves over time, and optionally periodically or continuously communicated to the processor;
wherein the touch sensitive surface has a background perceivable by the imaging system, wherein the background is usable to determine the boundary of a nail on the digit.

12. The system of claim 10, further comprising:
a portable electronic device, wherein the touch sensitive surface, the imaging system, and the processor are components of the portable electronic device;
wherein the touch sensitive surface includes a touch screen display;
wherein, the system optionally provides an instruction to a user, the instruction helping guide the user in moving their digit along a travel path.

13. A method comprising:
receiving from an imaging device an image of a nail (1601);
performing digital image processing on the image to locate a boundary of the nail (1602);
determining a travel path along which the nail is to be moved relative to an applicator (1605);
dispensing, via the applicator a coating onto the nail (1606).

14. The method of claim 13, further comprising, performing one or more of:
(i) displaying the travel path on a display;
(ii) detecting the location of the nail by sensing a location of a digit using a touch sensitive surface to which the nail is affixed;
(iii) determining, using the located boundary of the nail, an efficient dispensing procedure for the applicator to follow to coat the nail; wherein the efficient dispensing procedure includes identifying an efficient path.

## Patentansprüche

1. Nageldekorierungssystem (228), das Folgendes umfasst:
ein Bildgebungssystem (213, 232), um ein Bild des zu dekorierenden Nagels zu erhalten;
eine Anzeige (235), die konfiguriert ist, um das Bild des Nagels anzuzeigen;
einen Applikator (242), der eine Lackschicht auf den Nagel aufträgt;
einen Prozessor (236), der operativ mit dem Bildgebungssystem (213, 232), der Anzeige (235) und dem Applikator (242) verbunden ist;
**dadurch gekennzeichnet, dass** der Prozessor konfiguriert ist, um einen Nagelverfahrpfad zu bestimmen, entlang dessen der Nagel in Bezug auf den Applikator bewegt werden soll.

2. Nageldekorierungssystem nach Anspruch 1, wobei der Applikator eines oder mehrere des Folgenden umfasst:
(i) eine Spitze, mit der eine Lackschicht auf die Nageloberfläche aufgetragen werden kann, wenn die Spitze den Nagel berührt, und eine Düse, die eine Lackschicht auf die Nageloberfläche auftragen kann, ohne dass die Spitze den Nagel berühren muss; oder
(ii) ein Anschlussstück, das ausgebildet ist, um eine entfernbare Spitze aufzunehmen, oder entfernbar mit einem entfernbaren Lackbehälter verbunden ist; wobei:
der Applikator mit einem Lackbehälter verbunden ist;
der Applikator und der Lackbehälter aus dem Nageldekorierungssystem entfernbar sind.

3. Nageldekorierungssystem nach Anspruch 1, wobei der Prozessor konfiguriert ist, um außerdem eines oder mehrere des Folgenden durchzuführen:
Abbilden einer Darstellung des Nagelverfahrpfads auf der Anzeige;
(i) Anweisen eines Benutzers, den Nagelverfahrpfad zu üben, ohne dass der Applikator eine Lackschicht auf den Nagel aufträgt;
(ii) Detektieren, dass der Benutzer ein bestimmtes Ausmaß an Genauigkeit in Bezug auf den Nagelverfahrpfad erreicht hat;
(iii) Auftragen der Lackschicht auf den Nagel;
(iv) Detektieren des Nagelverfahrpfads in Bezug auf den Applikator;
(v) Aufzeichnen der Verfahrpfaddaten im Speicher des Nageldekorierungssystems.

4. Nageldekorierungssystem nach Anspruch 1, wobei das Nageldekorierungssystem mit einem Netzwerk verbunden ist und der Prozessor konfiguriert ist, um außerdem eines oder mehrere des Folgenden durchzuführen:
Detektieren eines Nagelverfahrpfads des Nagels in Bezug auf den Applikator;
Senden von Daten, die den Nagelverfahrpfad darstellen, über das Netzwerk;
Empfangen eines Nagelverfahrpfads, entlang dessen der Nagel in Bezug auf den Applikator bewegt werden soll, über das Netzwerk.

5. Nageldekorierungssystem nach Anspruch 1, das außerdem einen oder mehrere Motoren umfasst, die mit dem Applikator verbunden sind, wobei der Prozessor konfiguriert ist, um einen beliebigen aus dem einen oder den mehreren Motoren zu steuern, um den Applikator zu bewegen.

6. Nageldekorierungssystem nach Anspruch 1, das außerdem Folgendes umfasst:
Gewindeschafte, die mit einem oder mehreren Motoren verbunden sind; und
einen biegsamen Abschnitt mit Öffnungen für die Gewindeschafte, sodass die Drehung eines der Gewindeschafte einen entsprechenden Teil des biegsamen Abschnitts entlang des einen der Gewindeschafte bewegt;
wobei die Öffnungen des biegsamen Abschnitts ausgebildet sind, um Schraubmuttern aufzunehmen, die die Gewindeschafte aufnehmen können;
wobei sich die Muttern um auf die Gewindeschafte normale Achsen drehen können.

7. Nageldekorierungssystem nach Anspruch 1, das außerdem eines oder mehrere des Folgenden umfasst:
(i) einen Motor, der mit dem Applikator verbunden ist;
wobei der Motor ausgelegt ist, um den Applikator linear zu bewegen oder um den Applikator um eine Achse zu drehen;
(ii) einen Spiegel, der in einem Sichtfeld des Bildgebungssystems angeordnet ist;
oder
(iii) einen Trocknungsmechanismus.

8. Nageldekorierungssystem nach Anspruch 1, das außerdem eine tragbare elektronische Vorrichtung umfasst, wobei eines oder mehrere aus der Anzeige, dem Bildgebungssystem und dem Prozessor in der tragbaren elektronischen Vorrichtung integriert sind.

9. Nageldekorierungssystem nach Anspruch 1, das außerdem eine tragbare elektronische Vorrichtung umfasst, wobei die tragbare elektronische Vorrichtung physisch in dem Nageldekorierungssystem enthalten ist; wobei die tragbare elektronische Vorrichtung konfigurierbar ist, um eine Vorschau des von dem Nageldekorierungssystem dekorierten Nagels abzubilden.

10. Nageldekorierungssystem nach Anspruch 1, das außerdem eine berührungsempfindliche Oberfläche umfasst, die konfiguriert ist, um die Gegenwart eines Fingers zu detektieren;
wobei das Bildgebungssystem konfiguriert ist, um als Reaktion auf die Detektion der Gegenwart eines Fingers durch die berührungsempfindliche Oberfläche ein Bild des Fingers, der sich im Wesentlichen in einem Sichtfeld des Bildgebungssystems befindet, aufzuzeichnen;
wobei der Prozessor konfiguriert ist, um einen Befehlssatz auszuführen, wobei der Befehlssatz bei Ausführung durch den Prozessor das System dazu veranlasst, das Bild des Fingers zu analysieren, ein Maschinensichtverfahren durchzuführen, um die Grenze eines Nagels auf dem Finger zu bestimmen.

11. Nageldekorierungssystem nach Anspruch 10, das außerdem Folgendes umfasst:
einen Lackapplikator, der ausgelegt ist, um als Reaktion auf die Bestimmung durch den Prozessor, dass sich der Lackapplikator in Bezug auf den Nagel in Position befindet, um eine Lackschicht aufzutragen, eine Lackschicht auf den Nagel aufzutragen;
einen Motor, der ausgelegt ist, um:
den Lackapplikator in Bezug auf den Nagel in Position zu bewegen oder zu steuern; oder
das Bildgebungssystem in Bezug auf den Finger in Position zu bewegen, um den Finger in das Sichtfeld zu bringen; wobei der Motor vom Prozessor gesteuert wird;
wobei die berührungsempfindliche Oberfläche eine Position des Fingers auf der berührungsempfindlichen Oberfläche detektiert und dem Prozessor die Position des Fingers mitteilt;
wobei die Position bestimmt wird, wenn sie sich mit der Zeit bewegt, und dem Prozessor gegebenenfalls regelmäßig oder kontinuierlich mitgeteilt wird;
wobei die berührungsempfindliche Oberfläche einen Hintergrund aufweist, der von dem Bildgebungssystem wahrnehmbar ist, wobei der Hintergrund verwendet werden kann, um die Grenze eines Nagels auf dem Finger zu bestimmen.

12. System nach Anspruch 10, das außerdem eine tragbare elektronische Vorrichtung umfasst, wobei die berührungsempfindliche Oberfläche, das Bildgebungssystem und der Prozessor Komponenten der tragbaren elektronischen Vorrichtung sind;
wobei die berührungsempfindliche Oberfläche eine Touchscreen-Anzeige umfasst;
wobei das System einem Benutzer gegebenenfalls Anweisungen bereitstellt, wobei die Anweisungen dem Benutzer helfen, seinen Finger entlang des Verfahrpfads zu bewegen.

13. Verfahren, das Folgendes umfasst:
Empfangen eines Bilds eines Nagels von einer Bildgebungsvorrichtung (1601);
Durchführen einer digitalen Bildverarbeitung auf dem Bild, um eine Grenze des Nagels zu lokalisieren (1602);
Bestimmen eines Verfahrpfads, entlang dessen der Nagel in Bezug auf einen Applikator bewegt werden soll (1605);
Auftragen einer Lackschicht auf den Nagel über den Applikator (1606).

14. Verfahren nach Anspruch 13, das außerdem das Durchführen von einem oder mehreren des Folgenden umfasst:
(i) Anzeigen des Verfahrpfads auf einer Anzeige;
(ii) Detektieren der Position des Nagels durch Abfühlen einer Position eines zu dem Nagel zugehörigen Fingers unter Verwendung einer berührungsempfindlichen Oberfläche;
(iii) Bestimmen, unter Verwendung der lokalisierten Nagelgrenze, eines effizienten Abgabeverfahrens, dem der Applikator folgt, um eine Lackschicht auf den Nagel aufzutragen; wobei das effiziente Abgabeverfahren das Identifizieren eines effizienten Pfads umfasst.

## Revendications

1. Système de décoration d'ongles (228) comprenant :
un système d'imagerie (213, 232) pour acquérir une image d'un ongle à décorer ;
un dispositif d'affichage (235) configuré pour afficher l'image de l'ongle ;
un applicateur (242) qui applique un revêtement sur l'ongle ;
un processeur (236) fonctionnellement couplé au système d'imagerie (213, 232), au dispositif d'affichage (235) et à l'applicateur (242) ;
**caractérisé en ce que** le processeur est configuré pour déterminer un trajet de déplacement d'ongle le long duquel l'ongle devrait se déplacer par rapport à l'applicateur.

2. Système de décoration d'ongles selon la revendication 1, dans lequel l'applicateur comprend l'un ou plusieurs parmi :
(i) un embout qui peut appliquer un revêtement sur la surface de l'ongle lorsque l'embout entre en contact avec l'ongle et une buse qui peut appliquer un revêtement sur la surface de l'ongle sans nécessiter que l'embout entre en contact avec l'ongle ; ou
(ii) un raccord configuré pour recevoir un embout amovible ou qui est couplé de façon amovible à un réservoir de revêtement qui est amovible ; dans lequel :
l'applicateur est relié à un réservoir de revêtement ;
l'applicateur et le réservoir de revêtement peuvent être séparés du système de décoration d'ongles.

3. Système de décoration d'ongles selon la revendication 1, dans lequel le processeur est configuré pour conduire, en outre, une ou plusieurs des opérations suivantes :
décrire une représentation du trajet de déplacement d'ongle sur le dispositif d'affichage ;
(i) donner des instructions à un utilisateur pour mettre en pratique le trajet de déplacement d'ongle sans que l'applicateur applique un revêtement sur l'ongle ;
(ii) détecter que l'utilisateur a un niveau de précision déterminé par rapport au trajet de déplacement d'ongle ;
(iii) appliquer le revêtement sur l'ongle ;
(iv) détecter le trajet de déplacement d'ongle de l'ongle par rapport à l'applicateur ;
(v) enregistrer les données de trajet de déplacement dans la mémoire du système de décoration d'ongles.

4. Système de décoration d'ongles selon la revendication 1, dans lequel le système de décoration d'ongles est connecté à un réseau et le processeur est configuré pour effectuer en outre une ou plusieurs des opérations suivantes :
détecter un trajet de déplacement d'ongle de l'ongle par rapport à l'applicateur ;
envoyer des données représentant le trajet de déplacement d'ongle sur le réseau ;
recevoir, par l'intermédiaire du réseau, un trajet de déplacement d'ongle selon lequel l'ongle doit être déplacé par rapport à l'applicateur.

5. Système de décoration d'ongles selon la revendication 1, comprenant en outre :
un ou plusieurs moteurs couplés à l'applicateur, dans lequel le processeur est configuré pour commander l'un quelconque des un ou plusieurs moteurs pour déplacer l'applicateur.

6. Système de décoration d'ongles selon la revendication 1 comprenant en outre :
des arbres filetés reliés à un ou plusieurs moteurs ; et
une section pliable avec une ouverture pour les arbres filetés de sorte que la rotation d'un des arbres filetés déplace une partie correspondante de la section pliable le long dudit arbre fileté ;
dans lequel, les ouvertures de la section pliable sont formées pour recevoir un écrou fileté qui peut recevoir les arbres filetés ;
dans lequel les écrous peuvent tourner autour d'axes perpendiculaires aux arbres filetés.

7. Système de décoration d'ongles selon la revendication 1, comprenant en outre, l'un ou plusieurs parmi :
(i) un moteur couplé à l'applicateur ;
dans lequel le moteur est configuré pour déplacer l'applicateur linéairement ou faire tourner l'applicateur autour d'un axe ;
(ii) un miroir agencé dans un champ de visée du système d'imagerie ; ou
(iii) un mécanisme de séchage.

8. Système de décoration d'ongles selon la revendication 1 comprenant en outre :
un dispositif électronique portable, dans lequel l'un ou plusieurs parmi, le dispositif d'affichage, le système d'imagerie et le processeur sont intégrés au dispositif électronique portable.

9. Système de décoration d'ongles selon la revendication 1, comprenant en outre :
un dispositif électronique portable, dans lequel le dispositif électronique portable est physiquement contenu dans le système de décoration d'ongles ; dans lequel le dispositif électronique portable est configurable pour décrire une prévisualisation de l'ongle décoré par le système de décoration d'ongles.

10. Système de décoration d'ongles selon la revendication 1, comprenant en outre :
une surface tactile configurée pour détecter la présence d'un doigt ;
dans lequel, le système d'imagerie est configuré pour enregistrer une image du doigt sensiblement dans un champ de visée du système d'imagerie, en réponse à la détection de la présence du doigt par la surface tactile ;
dans lequel, le processeur est configuré pour exécuter un ensemble d'instructions, l'ensemble d'instructions, qui, lorsqu'il est exécuté par le processeur, amenant le système à : analyser l'image du doigt,
exécuter une technique de vision par machine pour déterminer un contour d'un ongle sur le doigt.

11. Système de décoration d'ongles selon la revendication 10 comprenant en outre :
un applicateur de revêtement configuré pour distribuer un revêtement sur l'ongle en réponse au processeur déterminant que l'applicateur de revêtement est dans une position, par rapport à l'ongle, pour appliquer un revêtement ;
un moteur configuré pour :
déplacer ou manipuler l'applicateur de revêtement en position, par rapport à l'ongle ; ou
déplacer le système d'imagerie en position, par rapport au doigt pour amener le doigt dans le champ de visée ; dans lequel le moteur est commandé par le processeur ;
dans lequel la surface tactile détecte une position du doigt sur la surface tactile, et communique la position du doigt au processeur ;
dans lequel la position est déterminée au fur et à mesure qu'elle se déplace au cours du temps, et facultativement, est communiquée périodiquement ou en continu au processeur ;
dans lequel la surface tactile a un arrière-plan perceptible par le système d'imagerie, dans lequel l'arrière-plan est utilisable pour déterminer le contour d'un ongle sur le doigt.

12. Système selon la revendication 10, comprenant en outre :
un dispositif électronique portable, dans lequel la surface tactile, le système d'imagerie, et le processeur sont des composants du dispositif électronique portable ;
dans lequel la surface tactile comprend un écran tactile ;
dans lequel, le système fournit facultativement une instruction à un utilisateur, l'instruction contribuant à guider l'utilisateur pour déplacer son doigt le long d'un trajet de déplacement.

13. Procédé comprenant :
la réception depuis un dispositif d'imagerie d'une image d'un ongle (1601) ;
la conduite d'un traitement d'image numérique sur l'image pour localiser un contour de l'ongle (1602) ;
la détermination d'un trajet de déplacement le long duquel l'ongle doit être déplacé par rapport à un applicateur (1605) ;
la distribution, via l'applicateur, d'un revêtement sur l'ongle (1606).

14. Procédé selon la revendication 13, comprenant en outre, la conduite d'une ou plusieurs des opérations suivantes :
(i) affichage du trajet de déplacement sur un dispositif d'affichage ;
(ii) détection de l'emplacement de l'ongle par détection d'un emplacement d'un doigt au moyen d'une surface tactile sur laquelle l'ongle est fixé ;
(iii) détermination, au moyen du contour de l'ongle localisé, d'une procédure de distribution efficace à suivre pour l'applicateur pour revêtir l'ongle ; dans lequel la procédure de distribution efficace comprend l'identification d'un trajet efficace.
